(19) **Europäisches Patentamt**

**European Patent Office**

**Office européen des brevets**

(11) **EP 0 627 111 B1**

(12) **FASCICULE DE BREVET EUROPEEN**

(45) Date de publication et mention
de la délivrance du brevet:
**16.02.2000 Bulletin 2000/07**

(51) Int. Cl.⁷: **G11B 5/09**, G11B 5/008,
G11B 5/49

(21) Numéro de dépôt: **94902842.7**

(22) Date de dépôt: **21.12.1993**

(86) Numéro de dépôt international:
**PCT/FR93/01277**

(87) Numéro de publication internationale:
**WO 94/15332 (07.07.1994 Gazette 1994/15)**

(54) **Dispositif et système d' enregistrement magnétique d' informations**

Vorrichtung und System zur magnetischen Datenaufzeichnung

Device and system for magnetic recording of data

(84) Etats contractants désignés:
**DE ES FR GB IT**

(30) Priorité: **22.12.1992 FR 9215472**

(43) Date de publication de la demande:
**07.12.1994 Bulletin 1994/49**

(73) Titulaires:
• **THOMSON-CSF**
**75008 Paris (FR)**
• **THOMSON multimedia**
**92648 Boulogne Cédex (FR)**

(72) Inventeurs:
• **MAURICE, François**
**F-92402 Courbevoie Cédex (FR)**
• **SONRIER, Michel**
**F-92402 Courbevoie Cédex (FR)**

• **PIROT, François-Xavier**
**F-92402 Courbevoie Cédex (FR)**

(74) Mandataire: **Guérin, Michel et al**
**Thomson-CSF Propriété Intellectuelle,**
**13, Avenue du Président Salvador Allende**
**94117 Arcueil Cédex (FR)**

(56) Documents cités:
**EP-A- 0 012 264      EP-A- 0 097 836**
**EP-A- 0 098 358      EP-A- 0 340 085**
**US-A- 4 303 956**

• **PATENT ABSTRACTS OF JAPAN vol. 19, no. 123**
**(P-1330)27 Mars 1992 & JP,A,03 290 805**
**(HITACHI MAXELL LTD.) 20 Décembre 1991**
• **RESEARCH DISCLOSURE no. 333 , Janvier 1992**
**, EMSWORTH GB page 22 XP000281135**
**'Tracking utilizing synchronization signals'**

**Description**

L'invention concerne un procédé, un dispositif et un système d'enregistrement magnétique d'informations sur plusieurs pistes parallèles. Elle se rapporte plus particulièrement au domaine de l'enregistrement sur bande magnétique et concerne les systèmes d'écriture magnétique multipistes numériques.

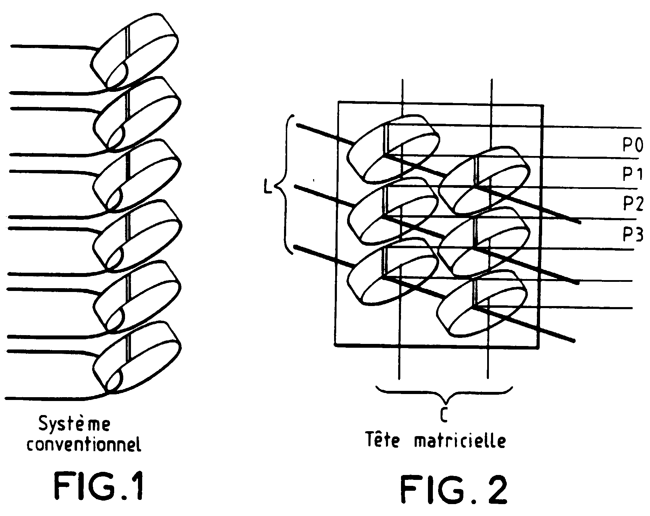

L'augmentation des débits et de la densité de stockage de l'information s'accompagne souvent d'une augmentation du nombre des têtes magnétiques d'écriture et de leur densité d'intégration, accentuant le phénomène de diaphonie à l'écriture entre pistes jusqu'à le rendre prohibitif dans certains cas. Les lignes de champ magnétique d'une tête peuvent se refermer via les pôles magnétiques des têtes voisines d'autant plus facilement que leur éloignement diminue. Le procédé et le système décrits par cette invention offrent une solution pour corriger la diaphonie introduite à l'écriture. Ils peuvent s'adapter à tout système conventionnel d'écriture multipiste tel que représenté en figure 1 utilisant plusieurs têtes d'écriture.

Ils peuvent s'appliquer également aux têtes de type matriciel multipistes et statiques telles que décrites dans la Demande de Brevet français n° 88 05592 et représenté en figure 2. Une telle tête est également décrite dans EP-A-0 340 085.

Une telle tête d'enregistrement comporte un grand nombre de pôles magnétiques répartis sur L lignes et C colonnes et qui donnent lieu à l'inscription sur un support magnétique de pistes (p0, p1, p2, ...) quasiment jointives.

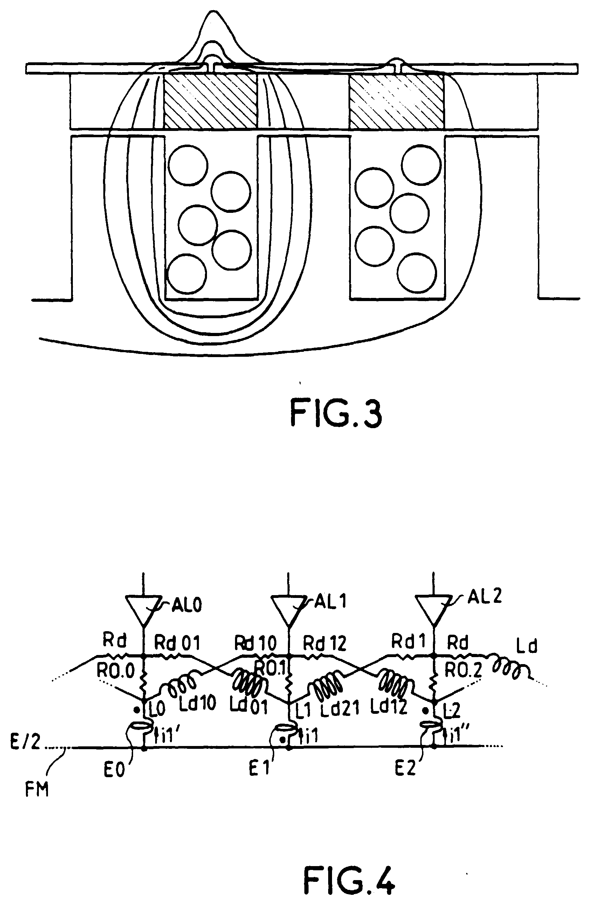

Comme cela est représenté en figure 3, le flux magnétique induit par une tête magnétique et l'écriture de cette dernière tête peut donc être faussé par le flux magnétique de la première tête.

Le document US 4 303 956 prévoit de raccorder ensemble des bobinages de têtes voisines de façon à inscrire des combinaisons d'informations. Cependant, dans ce document, les mêmes fils de bobinage passent par toutes les têtes et les mêmes courants d'excitation affectent toutes les têtes d'une matrice et pas seulement les têtes voisines de celles que l'on veut exciter. Cet état antérieur de la technique fait de base au préambule de la revendication 1.

L'invention permet de résoudre ce problème de diaphonie et est applicable aussi bien aux têtes magnétiques du type représenté en figure 1 qu'aux têtes magnétiques matricielles de la figure 2.

L'invention concerne donc un dispositif d'enregistrement magnétique comprenant au moins une série de têtes d'enregistrement magnétique permettant d'enregistrer des informations sur plusieurs pistes d'un support d'enregistrement magnétique, chaque tête induisant un flux magnétique d'inscription sur une piste et des flux magnétiques de diaphonie sur les pistes voisines, l'enroulement (L0, L1, L2) de chaque tête etant couplé au moins aux enroulements (L0, L1, L2) des têtes qui lui sont voisines, caractérisé en ce qu'un courant de commande transmis à ladite tête donne lieu à au moins un courant dérivé vers les têtes voisines, lesquelles induisent alors sur lesdites pistes voisines un flux magnétique qui s'oppose au flux de diaphonie.

Les différents objets et caractéristiques de l'invention apparaîtront plus clairement dans la description qui va suivre et dans les figures annexées qui représentent :

- les figures 1 et 2, des exemples de réalisation de têtes magnétiques;
- la figure 3, un exemple de fonctionnement de têtes magnétiques proches l'une de l'autre ;
- la figure 4, un exemple de réalisation de l'invention applicable à une rangée de têtes magnétiques ;
- les figures 5a, 5b, des exemples de commandes de têtes magnétiques disposées de façon matricielle ;
- les figures 6 et 7, un exemple de réalisation de l'invention applicable à une matrice de têtes magnétiques ;
- les figures 8 et 9 une variante de réalisation de l'invention

En se reportant à la figure 4, on va tout d'abord décrire un exemple de réalisation de l'invention applicable à une tête d'enregistrement magnétique du type de la figure et comprenant donc une série de têtes élémentaires.

Chaque tête élémentaire comporte un enroulement de commande E0, E1, E2.

Chaque enroulement est connecté entre un circuit d'alimentation de courant de commande AL0, AL1, AL2 et un conducteur commun FM fournissant un potentiel commun.

Selon l'invention deux enroulements voisins tels que EL0 et EL1 sont bobinés selon des sens enroulements inverses de telle façon que si ils sont alimentés par des courants de même sens (par exemple des courants allant des circuits AL0, AL1 vers le conducteur FM), ils créent dans les circuits magnétiques des têtes élémentaires, et donc dans le support d'enregistrement, des champs magnétiques de sens contraires.

On peut également considérer que les bobinages sont bobinés dans le même sens mais qu'ils sont alimentés en sens inverses. C'est ce qui est représenté sur la figure 4 où les entrées homologues des bobinages sont repérées par des points situés à une extrémité des bobinages. On voit donc par exemple que les deux bobinages E0 et E1 sont alimentés en sens inverse.

Chaque bobinage est alimenté par son circuit de commande AL0, AL1, AL2 à travers une résistance R0.0, R0.1, R0.2 qui détermine le courant dans l'enroulement.

De plus, la sortie de chaque circuit de commande d'un enroulement est couplée aux enroulements situés de part et d'autre de cet enroulement. Ainsi, le circuit AL1 est couplé à l'enroulement E0 par une résistance Rd10 et une inductance Ld10 et à l'enroulement E2 par une résistance Rd12 et une inductance Ld12.

Lors de la commande de l'enroulement E1, le circuit AL1 fournit un courant il à l'enroulement E1. L'enroulement E1 induit un champ magnétique d'une direction déterminée dans la tête magnétique élémentaire correspondante ainsi qu'un champ magnétique de même direction dans les têtes voisines comme cela a été expliqué en se reportant à la figure 3.

Les enroulements des têtes voisines E0 et E2 sont couplés à la sortie du circuit de commande AL1 respectivement par une résistance Rd10 et une inductance Ld10 d'une part et par une résistance Rd12 et une inductance Ld12. Les enroulements E0 et E2 reçoivent du circuit AL1 des courants i' et i'' qui créent l'induction de champs magnétiques lesquels tendent à s'opposer aux champs magnétiques crée dans ces têtes par l'enroulement E1, cela en raison des sens des bobinages et de leur sens d'alimentation.

Le circuit de la figure 4 permet donc de supprimer l'influence de la commande d'une tête magnétique sur les têtes voisines.

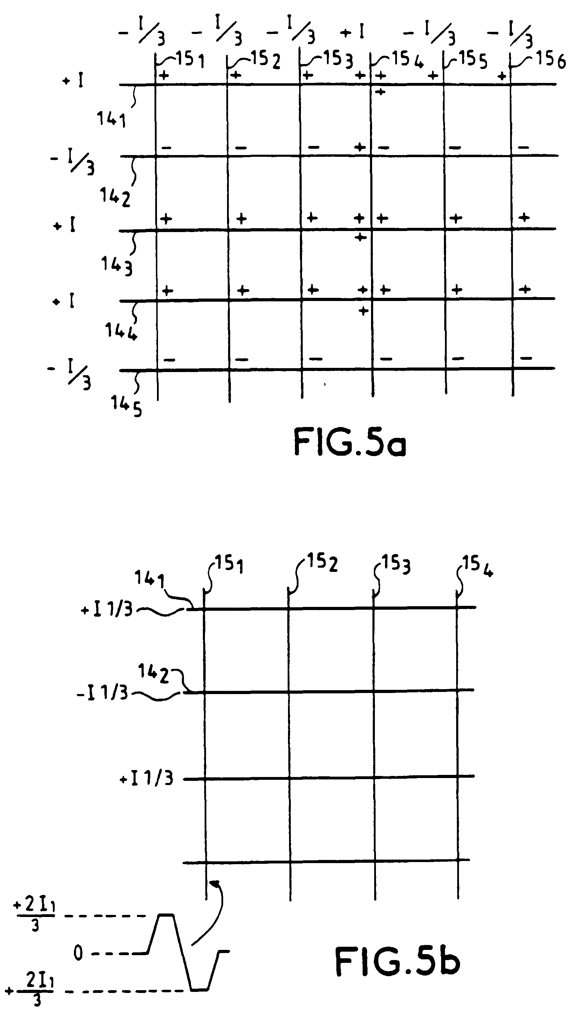

La figure 5 représente un circuit permettant de corriger, en liaison avec le circuit de la figure 4, l'influence d'une tête sur les têtes voisines dans le cadre de têtes magnétiques organisées de façon matricielle.

Il convient tout d'abord de décrire un mode possible de commande d'une tête magnétique matricielle.

Une telle tête telle que représentée en figure 2 comporte un grand nombre de pôles magnétiques répartis sur L lignes et C colonnes qu'on appelle respectivement lignes de donnée et colonnes de sélection. Elle permet d'écrire sur LxC pistes d'un support d'enregistrement.

L'adressage des LxC têtes magnétiques est multiplexé.

Selon l'exemple de la figure 5a la matrice dispose de cinq fils de lignes, $14_1$, $14_3$ et $14_4$, et de six fils de colonnes $15_1$ à $15_6$, soit en tout trente têtes magnétiques. Dans cet exemple, les lignes $14_1$, $14_3$ et $14_4$ et la colonne $15_4$ sont adressées, c'est-à-dire que ces conducteurs sont parcourus par un courant d'intensité I alors que les autres sont parcourus par un courant d'intensité -I/3. Ainsi on inscrit trois points : ceux qui se trouvent à l'intersection de la colonne $15_4$ et des lignes $14_1$, $14_3$ et $14_4$.

Selon une variante représentée en figure 5b sur chaque colonne on applique successivement deux impulsions de courant de sens contraires, d'abord une impulsion positive d'intensité $2I_1/3$. Sur les conducteurs de lignes on applique des intensités constantes $I_1/3$ si on veut inscrire un chiffre "1" binaire, ou -$I_1/3$ si on veut inscrire un "0" binaire.

A l'intersection des conducteurs $14_1$ et $15_1$ quand apparaît l'impulsion $2I_1/3$ son effet s'ajoute à celui du courant $I_1/3$ sur le conducteur $14_1$ pour aimanter le support magnétique avec un champ correspondant au courant $I_1$ de valeur suffisante pour inscrire un "1". Par contre ensuite lors de l'impulsion négative -$2I_1/3$ l'aimantation correspond au courant i-$I_1/3$ qui engendre un champ insuffisant pour effacer l'information déjà inscrite.

A l'intersection du conducteur $15_1$ et du conducteur $14_2$ de la figure 5b lors de l'apparition de l'impulsion positive, l'aimantation correspond à un courant d'intensité $I_1/3$ insuffisante pour inscrire ou effacer une information. Quand survient l'impulsion négative -$2I_1/3$ l'aimantation est équivalente à celle produite par un courant -$I_1$, ce qui permet l'inscription d'un "0".

Il est à noter que dans cette réalisation, contrairement à ce qui a été décrit en relation avec la figure 5b, une information est inscrite sur tous les points de chaque ligne.

De façon générale, dans ce mode de réalisation la somme des courants de lignes et de colonnes est, à l'apparition de l'impulsion de même sens sur la ligne que le courant sur la colonne associée, suffisante pour inscrire une information ; lors de l'impulsion de sens contraire la somme des courants est insuffisante pour inscrire ou effacer une information. Des résultats favorables sont obtenus quand la valeur absolue d'une alternance de l'intensité bipolaire est égale au double de la valeur absolue de l'intensité constante dans une ligne.

Comme on l'a décrit précédemment, la commande d'une tête peut influencer la commande des têtes voisines d'autant plus que la structure magnétique que constitue le support de la tête matricielle peut être continu d'une tête à l'autre. Les lignes de champ associées à un pôle peuvent se reformer par les pôles voisins créant une diaphonie entre lignes de donnée d'une part et entre colonnes de sélection d'autre part.

Selon l'invention les sens de bobinages (ou les sens d'alimentation) sont alternées entre lignes de donnée de numérotation paire et lignes de numérotation impaire. Il en est de même entre colonnes de sélection de numérotation paire et colonnes de numérotation impaire.

Le dispositif permettant de corriger la diaphonie à l'écriture consiste à prélever une partie du courant des lignes de donnée et des colonnes de sélection, et de l'injecter respectivement sur les lignes de donnée et les colonnes de sélection adjacentes afin de créer un effet proportionnel et opposé à l'origine de la diaphonie sur les pôles magnétiques concernés.

Dans les deux cas de commandes des figures 5a et 5b chaque tête magnétique est commandée par un fil de colonne et par un fil de ligne. Chaque tête magnétique possède donc un enroulement de ligne (L0, L1, L2) connecté à un fil de ligne et un enroulement de colonne (C0, C1, C2) connecté à un fil de colonne. Pour une ligne de têtes magnétiques, les enroulements de ligne de ces têtes sont connectés en série sur le fil de lignes correspondant. De même, pour une colonne de têtes magnétiques, les enroulements de colonne sont connectés en série sur le fil de colonne correspondant. Pour faciliter la description, on parle d'enroulements de lignes et d'enroulements de colonnes, mais comme cela est connu dans la technique, ces enroulements peuvent ne pas réellement exister et être simplement constitués par les fils de lignes et les fils de colonnes.

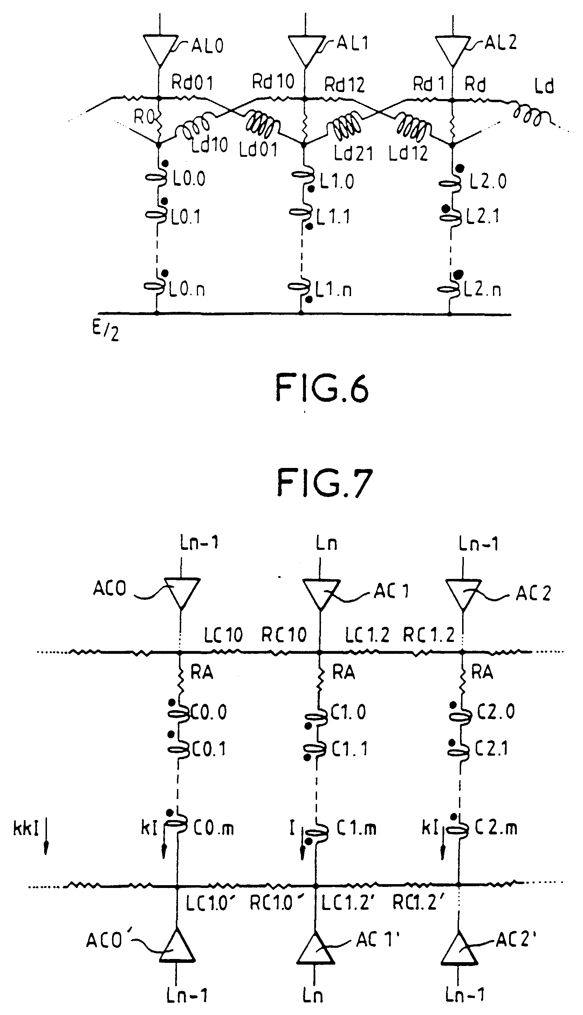

Pour pallier des effets de diaphonie entre des têtes de lignes voisines, les fils de ligne sont connectés entre eux comme cela est représenté en figure 6 à l'aide d'impédances de couplage. Ce circuit de correction de diaphonie est similaire à celui de la figure 4. Les bobinages de ligne d'une même ligne de têtes magnétiques sont connectés en série et bobinés de la même façon tels que les bobinages L1.0 à L1.n. Les bobinages des lignes voisines, tels que L0.0 à L0.n et L2.0 à L2.n sont connectés en série et bobinés en sens inverse de celui des bobinages L1.0 à L1.n

De même, pour pallier des effets de diaphonie entre des têtes colonnes voisines, les fils de lignes peuvent être connectés entre eux de la même façon.

Selon une autre forme de réalisation de l'invention, les fils de ligne (ou fils de lignes de données) sont commandés comme cela est représenté en figure 6.

Par contre les fils de colonnes (ou fils de colonne de sélection) sont commandés comme cela est représenté en figure 7. Chaque colonne telle que C0.0, ... C0.n est alimentée de part et d'autre par deux amplificateurs AC0 et AC0'. Les sorties des amplificateurs sont couplées aux amplificateurs voisins par des impédances telles que LC1.0, RC1.0 et LC1.0' et RC1.0'.

Comme le montre la figure 6 pour les lignes de donnée, si les bobinages sont alimentés par une tension E volts pour l'état + 1 et 0 volt pour l'état -1, ces derniers sont tous connectés à un potentiel commun de E/2 volts. R0 définit le courant nominal à + ou -ic/3. Si i est le courant désiré et k*i le courant à injecter sur les bobinages voisins pour corriger une diaphonie de k% alors

$$Rd = R0/k$$

où Rd (telle que RD0,1, RD1,0, RD12, RD21,..) est la résistance qu'il faut connecter entre les lignes de donnée pour corriger la diaphonie. L'inductance Ld (telle que Ld1.0, Ld0.1, ... Ld1.2) mise en série permet d'égaliser les temps de montée des courants. Elle doit être telle que :

$$Ld = (L0-M)(1-k)/k$$

où M est l'inductance mutuelle entre lignes de données voisines.

Pour la correction de diaphonie liée aux colonnes de sélection, il faut considérer que si la colonne n est active les autres colonnes sont inactives et les amplificateurs qui les alimentent ont leur sorties dans un état haute impédance donc virtuellement déconnectés. Ce qui autorise une correction sur les voisins immédiats et les plus éloignés du type de la figure 7. RA définit le courant nominal des colonnes de sélection à + ou -2ic/3 et RC (telle que RC1.0, RC1.2, RC1.0'...) les résistances de correction à connecter et telles que :

$$RC = (RA/2)(1-k)^2/k(1-k^n)$$

où n représente le nombre de colonnes.

LC (telle que LC1.0, LC1.2, LC1.0'...) est une inductance de correction associée qui permet d'équilibrer les temps de réaction entre la voie principale et les voies de correction, avec (Lcolonne totale-M)/RA = LC/RC, M représente ici l'inductance mutuelle entre deux colonnes de sélection voisines.

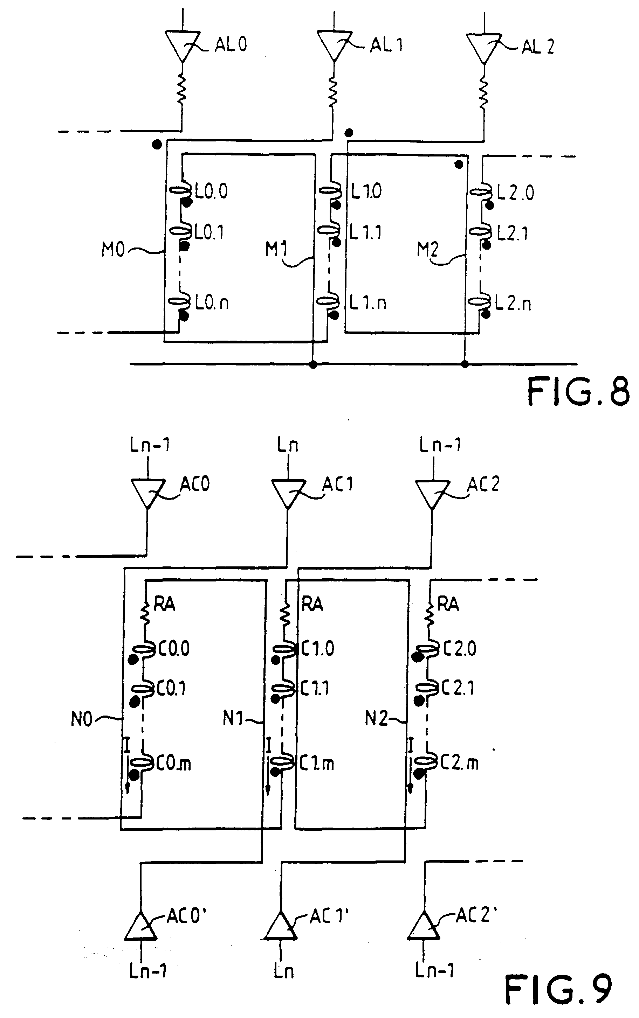

Les figures 8 et 9 représentent des variantes de réalisation des figures 6 et 7 respectivement. Selon ces variantes, le couplage entre têtes magnétiques voisines se fait à l'aide de bobinages supplémentaires.

Ainsi sur la figure 8, les bobinages L1.0, L1.1, ... L1.n de la ligne de têtes du milieu de la figure sont en série avec un bobinage MO qui parcoure les têtes de gauche et un bobinage M2 qui parcoure les têtes de droite. Pour simplifier, les bobinages MO et M2 sont représentés par un seul fil mais il pourrait y avoir à l'emplacement de chaque tête magnétique, une ou plusieurs spires. Cela dépend de la valeur du flux magnétique que l'on doit induire lors de la commande de la ligne L1.0, L1.1, ... L1.n pour corriger la diaphonie dans les têtes voisines.

La figure 9 représente un dispositif similaire pour la commande des colonnes.

Du point de vue pratique, la réalisation des bobinages sera telle que ce sera le même fil qui permettra la réalisation des bobinages L1.0, L1.1, ... L1.n et la réalisation des bobinages MO et M2.

Les sens des bobinages MO et M2 seront inversés par rapport au sens des bobinages L1.0, L1.1, ... L1.n de façon qu'un courant circulant dans le fil de bobinage permette d'induire avec les bobinages MO, M2 des flux qui s'opposent aux flux de diaphonie induit par les bobinages L1.0, L1.1, ... L1.n.

## Revendications

**1.** Dispositif d'enregistrement magnétique comprenant au moins une série de têtes d'enregistrement magnétique permettant d'enregistrer des informations sur plusieurs pistes d'un support d'enregistrement magnétique, chaque tête induisant un flux magnétique d'inscription sur une piste et des flux magnétiques de diaphonie sur les pistes voisines, l'enroulement (L0, L1, L2) de chaque tête étant couplé au moins aux enroulements (L0, L1, L2) des têtes qui lui sont voisines, caractérisé en ce qu'un courant de commande transmis à ladite tête donne lieu à au moins un courant dérivé vers les têtes voisines, lesquelles induisent alors sur lesdites pistes voisines un flux magnétique qui s'oppose au flux de diaphonie.

**2.** Dispositif selon la revendication 1, caractérisé en ce que le courant de commande d'une première tête induit un flux magnétique dont une partie est dérivé vers les têtes voisines, le couplage de la première tête aux têtes voisines étant réalisé par au moins une résistance de couplage (Rd10, Rd12) dont la valeur est ajustée de façon que le courant de diaphonie par la résistance de couplage induise un flux magnétique qui s'oppose aux flux magnétique dérivé.

**3.** Dispositif selon la revendication 2, caractérisé en ce que les enroulements de commande des têtes magnétiques sont bobinés (L0, L1, L2) sensiblement de la même façon, et possèdent une entrée et une sortie du courant de commande, l'entrée de la première tête étant connectée aux sorties des têtes voisines, de telle façon que le courant de commande de la première tête circule dans celle-ci de l'entrée vers la sortie tandis que les courants dérivés circulent dans les têtes voisines de la sortie vers l'entrée.

**4.** Dispositif selon la revendication 1, caractérisé en ce que les enroulements (L0, L1, L2) des têtes voisines sont bobinées en sens inverses et sont alimentées dans le même sens.

**5.** Dispositif selon la revendication 1, caractérisé en ce qu'il comporte une matrice de têtes magnétiques commandées par des fils de lignes de données (L0.0 à L2.n) et des fils de colonne de sélection (C0.0 à C2.m), la commande d'une tête magnétique se faisant par circulation d'un courant déterminé sur un fil de ligne de données et d'un courant déterminé sur un fil de colonne de sélection ; chaque fil de ligne étant couplé à chaque fil de ligne voisin par une impédance de couplage (Rd1.0, Rd1.2) et chaque fil de colonne étant couplé à chaque fil de colonne voisin par une impédance de couplage (RC1.0, RC1.2).

**6.** Dispositif selon la revendication 4, caractérisé en ce que chaque fil de colonne de sélection est connecté par ses deux accès à deux circuits d'alimentation qui sont à haute impédance lorsque l'alimentation est coupée, chaque accès de chaque fil de colonne étant couplé à un accès correspondant de chaque fil de colonne voisin.

**7.** Dispositif selon la revendication 4, caractérisé en ce que chaque fil de ligne étant commun aux têtes magnétiques d'une ligne de la matrice, le couplage d'un fil de ligne à chaque fil de ligne voisin se fait par une impédance de couplage commune et chaque fil de colonne étant commun aux têtes magnétiques d'une colonne de la matrice, le couplage d'un fil de colonne à chaque fil de colonne voisin se fait par une impédance de couplage commune.

**8.** Dispositif selon l'une des revendications 5 ou 6, caractérisé en ce que le couplage de chaque accès de chaque fil de colonne à l'accès correspondant de chaque fil de colonne voisin se fait par une impédance de couplage commune.

**9.** Dispositif selon la revendication 1, caractérisé en ce que chaque tête comporte au moins un fil d'enroulement de commande (L0, L1, L2) lequel fil est également bobiné dans les têtes voisines, l'ensemble étant alimenté en série.

**10.** Dispositif selon l'une des revendications 1 ou 9, caractérisé en ce qu'il comporte une matrice de têtes magnétiques commandées par des fils de lignes de données (L0.0 à L2.n) et des fils de colonne de sélection (C0.0 à C2.m), un fil de ligne de données étant connecté en série avec deux fils de compensation de diaphonie (M0, M2) associés aux lignes voisines et un fil de colonne étant connecté en série avec deux fils de compensation de diaphonie (C0, C2) associés aux colonnes voisines.

**11.** Système d'enregistrement magnétique comportant un support d'enregistrement capable d'enregistrer plusieurs pistes parallèles, ainsi qu'un dispositif d'enregistrement selon l'une quelconque des revendications 2 à 10, lesdites têtes d'enregistrement magnétiques étant disposées à proximité du support d'enregistrement de façon à enregistrer des informations sur lesdites pistes.

**12.** Système d'enregistrement selon la revendication 11, caractérisé en ce que le support d'enregistrement est une bande magnétique ou un disque magnétique.

**Claims**

**1.** Magnetic recording device comprising at least one series of magnetic recording heads allowing information to be recorded on several tracks of a magnetic recording medium, each head inducing a magnetic write flux in one track and magnetic crosstalk fluxes in the neighbouring tracks, the winding (L0, L1, L2) of each head being coupled at least to the windings (L0, L1, L2) of the heads which neighbour it, characterized in that a control current transmitted to the said head gives rise to at least one current diverted to the neighbouring heads which then induce a magnetic flux, in the said neighbouring tracks, which counters the crosstalk flux.

2. Device according to Claim 1, characterized in that the control current of a first head induces a magnetic flux which is partly diverted to the neighbouring heads, the first head being coupled to the neighbouring heads via at least one coupling resistor (Rd10, Rd12), the value of which is adjusted so that the current diverted by the coupling resistor induces a magnetic flux which counters the diverted magnetic fluxes.

3. Device according to Claim 2, characterized in that the control windings of the magnetic heads are wound (L0, L1, L2) in approximately the same way and have an input and an output for the control current, the input of the first head being connected to the outputs of the neighbouring heads in such a way that the control current of the first head flows through this head from the input to the output, whereas the diverted currents flow through the neighbouring heads from the output to the input.

4. Device according to Claim 1, characterized in that the windings (L0, L1, L2) of the neighbouring heads are wound in opposite directions and supplied in the same direction.

5. Device according to Claim 1, characterized in that it comprises a matrix of magnetic heads controlled by data row wires (L0.0 to L2.n) and selection column wires (C0.0 to C2.m), a magnetic head being controlled by the flow of a defined current in a data row wire and of a defined current in a selection column wire, each row wire being coupled to each neighbouring row wire via a coupling impedance (Rd1.0, Rd1.2) and each column wire being coupled to each neighbouring column wire via a coupling impedance (RC1.0, RC1.2').

6. Device according to Claim 4, characterized in that each selection column wire is connected via its two access points to two supply circuits which are at high impedance when the supply is cut off, each access point of each column wire being coupled to a corresponding access point of each neighbouring column wire.

7. Device according to Claim 4, characterized in that, since each row wire is common to the magnetic heads of a row of the matrix, a row wire is coupled to each neighbouring row wire via a common coupling impedance and, since each column wire is common to the magnetic heads of a column of the matrix, a column wire is coupled to each neighbouring column wire via a common coupling impedance.

8. Device according to either of Claims 5 and 6, characterized in that each access point of each column wire is coupled to the corresponding access point of each neighbouring column wire via a common coupling impedance.

9. Device according to Claim 1, characterized in that each head comprises at least one control winding wire (L0, L1, L2) which is also wound in the neighbouring heads, the assembly being series-supplied.

10. Device according to either of Claims 1 and 9, characterized in that it comprises a matrix of magnetic heads controlled by data row wires (L0.0 to L2.n) and selection column wires (C0.0 to C2.m), a data row wire being series-connected to two crosstalk compensation wires (M0, M2) associated with the neighbouring rows and a column wire being series-connected to two crosstalk compensation wires (C0, C2) associated with the neighbouring columns.

11. Magnetic recording system comprising a recording medium capable of recording on several parallel tracks, as well as a recording device according to any one of Claims 2 to 10, the said magnetic recording heads being arranged near the recording medium so as to record information on the said tracks.

12. Recording system according to Claim 11, characterized in that the recording medium is a magnetic tape or a magnetic disk.

**Patentansprüche**

1. Magnetische Aufzeichnungsvorrichtung mit mindestens einer Reihe magnetischer Aufzeichnungsköpfe, über die Daten auf mehrere Spuren eines magnetischen Aufzeichnungsträgers aufgezeichnet werden können, wobei jeder Kopf einen Schreib-Magnetfluß in eine Spur und Diaphonie-Magnetflüsse in Nachbarspuren induziert und die Wicklung (L0, L1, L2) jedes Kopfes mit zumindest den Wicklungen der jeweils benachbarten Köpfe gekoppelt ist, dadurch gekennzeichnet, daß ein an den Kopf übermittelter Steuerstrom zu mindestens einem zu den jeweiligen Nachbarköpfen geleiteten Strom führt, der dann in die Nachbarspuren einen dem Diaphoniefluß entgegengesetzten Fluß induziert.

2. Vorrichtung nach Anspruch 1, dadurch gekennzeichnet, daß der Steuerstrom eines ersten Kopfes einen Magnetfluß induziert, von dem ein Teil auf die Nachbarköpfe geleitet wird, wobei die Kopplung vom ersten Kopf zu den Nachbarköpfen über mindestens einen Kopplungswiderstand (Rd10, Rd12) erfolgt, dessen Wert so gewählt ist, daß der über den Kopplungswiderstand geleitete Strom einen Magnetfluß induziert, der dem Diaphoniefluß entgegengerichtet ist.

**3.** Vorrichtung nach Anspruch 2, dadurch gekennzeichnet, daß die Steuerwicklungen (L0, L1, L2) der Magnetköpfe im wesentlichen in gleicher Richtung gewickelt sind und einen Eingang und einen Ausgang für den Steuerstrom besitzen und daß der Eingang des ersten Kopfes an die Ausgänge der Nachbarköpfe so angeschlossen ist, daß der Steuerstrom des ersten Kopfes in diesem vom Eingang zum Ausgang fließt, während die abgeleiteten Ströme in den Nachbarköpfen vom Ausgang zum Eingang fließen.

**4.** Vorrichtung nach Anspruch 1, dadurch gekennzeichnet, daß die Wicklungen (L0, L1, L2) in benachbarten Köpfen in Gegenrichtung gewickelt und in gleicher Richtung gespeist sind.

**5.** Vorrichtung nach Anspruch 1, dadurch gekennzeichnet, daß sie eine Matrix von Magnetköpfen aufweist, die von Zeilendrähten (L0.0 bis L2.n) für Daten und von Spaltendrähten (C0.0 bis C2.m) zur Auswahl gesteuert werden, wobei zur Steuerung eines Magnetkopfes ein bestimmter Strom durch einen Zeilendraht und ein bestimmter Strom durch einen Spaltendraht fließt und wobei jeder Zeilendraht mit jedem benachbarten Zeilendraht über eine Kopplungsimpedanz (Rd1.0, Rd1.2) und jeder Spaltendraht mit jedem benachbarten Spaltendraht über eine Kopplungsimpedanz (RC1.0, RC1.2) gekoppelt ist.

**6.** Vorrichtung nach Anspruch 4, dadurch gekennzeichnet, daß jeder Spaltendraht mit seinen beiden Anschlüssen an je eine Speiseschaltung angeschlossen ist, die eine hohe Impedanz aufweist, wenn die Speisung unterbrochen ist, wobei jeder Anschluß jedes Spaltendrahts an einen entsprechenden Anschluß jedes benachbarten Spaltendrahts gekoppelt ist.

**7.** Vorrichtung nach Anspruch 4, dadurch gekennzeichnet, daß jeder Zeilendraht über alle Magnetköpfe einer Zeile der Matrix gemeinsam verläuft und die Kopplung von einem Zeilendraht zu jedem benachbarten über eine gemeinsame Kopplungsimpedanz erfolgt, während jeder Spaltendraht über alle Magnetköpfe einer Spalte der Matrix gemeinsam verläuft und die Kopplung von einem Spaltendraht zu jedem benachbarten über eine gemeinsame Kopplungsimpedanz erfolgt.

**8.** Vorrichtung nach Anspruch 5 oder 6, dadurch gekennzeichnet, daß die Kopplung jedes Anschlusses jedes Spaltendrahts mit dem entsprechenden Anschluß jedes benachbarten Spaltendrahts über eine gemeinsame Kopplungsimpedanz erfolgt.

**9.** Vorrichtung nach Anspruch 1, dadurch gekennzeichnet, daß jeder Kopf mindestens einen Wicklungsdraht (L0, L1, L2) zur Steuerung enthält, der auch durch die benachbarten Köpfe gewickelt ist, wobei diese Einheit in Reihe mit Strom gespeist ist.

**10.** Vorrichtung nach einem der Ansprüche 1 oder 9, dadurch gekennzeichnet, daß sie eine Matrix von Magnetköpfen besitzt, die von Zeilendrähten (L0.0 bis L2.n) für Daten und Spaltendrähten (C0.0 bis C2.m) zur Auswahl gesteuert werden, wobei ein Zeilendraht mit zwei zu den Nachbarzeilen gehörenden Diaphonie-Kompensationsdrähten (M0, M2) in Reihe geschaltet ist, während ein Spaltendraht mit zwei zu den Nachbarspalten gehörenden Diaphonie-Kompensationsdrähten (C0, C2) in Reihe geschaltet ist.

**11.** Magnetisches Aufzeichnungssystem mit einem magnetischen Aufzeichnungträger, der auf mehreren parallelen Spuren aufzeichnen kann, sowie mit einer Aufzeichnungsvorrichtung nach einem der Ansprüche 2 bis 10, wobei sich die magnetischen Aufzeichnungsköpfe in der Nähe des Aufzeichnungsträgers befinden, sodaß sie Daten auf den Spuren aufzeichnen.

**12.** Aufzeichnungssystem nach Anspruch 11, dadurch gekennzeichnet, daß der Aufzeichnungträger ein Magnetband oder eine Magnetscheibe ist.

Système
conventionnel

# FIG.1

P0
P1
P2
P3

Tête matricielle

# FIG. 2

FIG.3

FIG.4

FIG.5a

FIG.5b

FIG.6

FIG.7

FIG.8

FIG.9